(19) Europäisches Patentamt
European Patent Office
Office européen des brevets

(11) **EP 2 963 755 B1**

(12) **FASCICULE DE BREVET EUROPEEN**

(45) Date de publication et mention
de la délivrance du brevet:
**16.11.2016 Bulletin 2016/46**

(51) Int Cl.:
***H02H 7/16*** *(2006.01)*  ***H01G 2/14*** *(2006.01)*
***H01G 4/18*** *(2006.01)*

(21) Numéro de dépôt: **15174942.1**

(22) Date de dépôt: **02.07.2015**

(54) **SYSTÈME DE SURVEILLANCE D'UNE BATTERIE DE CONDENSATEURS ET INSTALLATION ÉLECTRIQUE COMPORTANT UN TEL SYSTÈME**

ÜBERWACHUNGSSYSTEM EINER KONDENSATORBATTERIE, UND ELEKTRISCHE ANLAGE MIT EINEM SOLCHEN SYSTEM

SYSTEM FOR MONITORING A CAPACITOR BANK AND ELECTRICAL INSTALLATION COMPRISING SUCH A SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **03.07.2014 FR 1456395**

(43) Date de publication de la demande:
**06.01.2016 Bulletin 2016/01**

(73) Titulaire: **Schneider Electric Industries SAS 92500 Rueil-Malmaison (FR)**

(72) Inventeurs:
• GUILLET, Jérôme
  38050 GRENOBLE Cedex 09 (FR)
• LUPIN, Jean-Marc
  38050 GRENOBLE Cedex 09 (FR)

(74) Mandataire: **Lavoix
62, rue de Bonnel
69448 Lyon Cedex 03 (FR)**

(56) Documents cités:
EP-A1- 1 873 796      GB-A- 2 487 495
JP-A- H06 275 455     US-A- 3 562 586
US-A1- 2013 050 878

EP 2 963 755 B1

**Description**

L'invention concerne un système de surveillance d'une batterie de condensateurs comprenant des capteurs de température montés sur chacun des condensateurs. L'invention concerne également une installation électrique de compensation comprenant un tel système de surveillance.

Les batteries de condensateurs basse tension pour la compensation d'énergie réactive se composent généralement d'un certain nombre de condensateurs unitaires associés à des appareils de manoeuvre et de protection. Un condensateur unitaire comprend des éléments réalisés avec du film métallisé ayant une propriété d'auto-cicatrisation. Ces éléments sont assemblés dans une enveloppe qui comprend un système de sécurité pour éviter un risque de rupture de boîtier en fin de vie.

Les condensateurs de puissance à film métallisé sont particulièrement sensibles aux températures élevées, qui peuvent être dues à des conditions de fonctionnement sévères ou être produites par les condensateurs eux-mêmes. Ces températures élevées entraînent un vieillissement accéléré du matériau diélectrique des condensateurs et augmentent la probabilité de défaillance.

Même si les appareils sont équipés de systèmes de protection, ces systèmes ont des limites et ne peuvent pas fonctionner dans toutes les situations. Une surveillance permanente de température avec une déconnexion des appareils ayant une température élevée permet de minimiser les risques de défaillance pouvant entrainer des incendies

Les condensateurs en défaut dont le système de sécurité a fonctionné sont remplacés lors d'opérations de maintenance. Cependant cela ne peut éviter les défaillances hors des périodes de maintenance.

US-A-2013/0050878 décrit un système de surveillance d'une batterie de condensateurs comprenant des capteurs de température pour surveiller en permanence la température de chacun des condensateurs. Chaque capteur est relié à une unité de détection elle-même reliée à une unité centrale. Une telle solution implique un câblage complexe et fastidieux du fait du grand nombre de dispositifs à relier pour la transmission des données de température.

C'est à ces inconvénients qu'entend remédier l'invention en proposant un nouveau système de surveillance d'une batterie de condensateurs, dont la structure permet une détection des surchauffes de condensateurs et un câblage plus simples que les systèmes de l'art antérieur.

A cet effet l'invention concerne un système de surveillance d'une batterie de condensateurs comprenant des capteurs de température montés sur chacun des condensateurs. Ce système est caractérisé en ce que sur la surface externe de chaque condensateur sont montés deux capteurs de température, un premier capteur comprenant un contact électrique adapté pour s'ouvrir lorsque la température de la surface externe du condensateur dépasse une première valeur seuil, le contact électrique du premier capteur étant connecté en parallèle à une résistance, le second capteur incluant un second contact électrique adapté pour s'ouvrir lorsque la température de la surface externe du condensateur dépasse une seconde valeur seuil supérieure à la première valeur seuil, en ce que tous les capteurs du système sont reliés en série au sein d'un circuit électrique et en ce que le système de surveillance comprend une unité de détection adaptée pour surveiller les variations de la résistance du circuit reliant les capteurs.

Grâce à l'invention, l'échauffement des condensateurs est détecté au moyen d'une mesure dans un circuit en série reliant les capteurs de température entre eux. Cela permet un câblage très simple du système de surveillance et facilite l'installation des capteurs dans la batterie de condensateurs.

Selon des aspects avantageux mais non obligatoires de l'invention, un tel système de surveillance peut incorporer une ou plusieurs des caractéristiques suivantes, prises dans toute combinaison techniquement admissible :

- L'unité de détection comprend des moyens de mesure de la tension aux bornes d'une résistance appartenant au circuit dans lequel l'ensemble des capteurs de température sont reliés en série.
- Le système comprend une source de tension connectée en série au circuit électrique au sein duquel l'ensemble des capteurs de température sont reliés en série.
- La valeur du premier seuil de température est comprise entre 50°C et 70°C, et vaut de préférence 60°C.
- La valeur du second seuil de température est comprise entre 70°C et 90°C, et vaut de préférence 80°C.
- Le système comprend des unités de mesure comprenant chacune, préalablement câblés, des premier et second capteurs de température et une résistance reliée au premier capteur, et des bornes de raccordement des unités de mesure entre elles.
- Le système comprend, pour chaque condensateur, un système de maintien des capteurs de température associés à ce condensateur, incluant un support dans lequel les capteurs sont montés et dans lequel est insérée une sangle de serrage apte à plaquer le support et les capteurs de température contre la surface externe du condensateur.
- Le support comprend deux logements dans lesquels les capteurs sont insérés et les logements sont articulés au moyen d'une partie flexible de manière à s'adapter à la surface externe des condensateurs.
- L'unité de détection est adaptée pour déterminer automatiquement et par le calcul le nombre de condensateurs dont la température a dépassé le premier seuil de température.

L'invention concerne également une installation électrique de compensation comprenant un système de surveillance tel que défini ci-dessus.

L'invention sera mieux comprise et d'autres avantages de celle-ci apparaîtront plus clairement à la lumière de la description qui va suivre d'un système de surveillance et d'une installation électrique conformes à son principe, faite à titre d'exemple non limitatif en référence aux dessins annexés dans lesquels :

- la figure 1 est un schéma d'une installation électrique conforme à l'invention ;
- la figure 2 est une vue d'un condensateur de l'installation de la figure 1, sur lequel sont montés des capteurs d'un système de surveillance conforme à l'invention ;
- la figure 3 est un graphique représentant le fonctionnement d'un système de surveillance conforme à l'invention ;
- la figure 4 est une vue en perspective d'un système de maintien de capteurs appartenant à un système de surveillance conforme à un second mode de réalisation de l'invention, dans lequel sont insérés des capteurs ;
- la figure 5 est une vue de face des capteurs et du système de maintien de la figure 4, montés sur un condensateur.

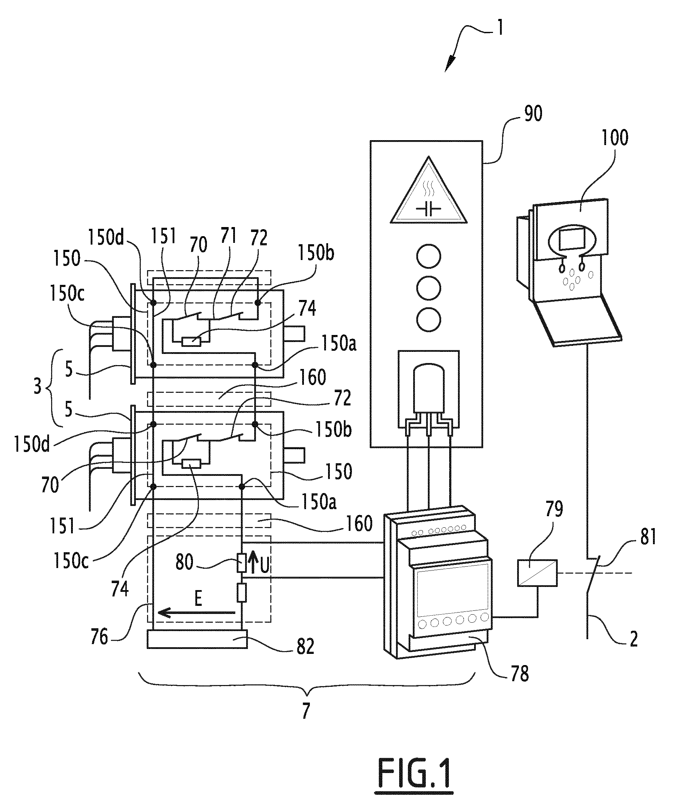

Une installation électrique de compensation 1 est représentée sur la figure 1. Cette installation électrique 1 comprend une batterie de condensateurs 3 composée d'un certain nombre de condensateurs 5 dont deux sont représentés à la figure 1. L'installation électrique 1 inclut également un équipement électrique de contrôle/commande 100, permettant de contrôler la mise sous tension des condensateurs, connecté à la batterie 3 de condensateurs par une liaison électrique non représentée, et alimenté par un réseau de distribution d'électricité 2.

L'installation 1 comprend un système de surveillance 7 de la batterie de condensateurs. Le système 7 comprend, pour chaque condensateur 5, deux capteurs de température 70 et 72 montés sur la surface externe 50 de chaque condensateur 5. Les capteurs 70 et 72 sont fixés au condensateur 5 par une sangle 86 qui plaque les capteurs 70 et 72 contre la surface 50. Le premier capteur 70 comprend un contact électrique adapté pour s'ouvrir lorsque la température de la surface externe 50 du condensateur 5 dépasse une première valeur seuil T1. Le contact électrique du premier capteur 70 est connecté en parallèle à une résistance 74 de manière que, lorsque le contact électrique s'ouvre quand la température du condensateur dépasse la valeur T1, le courant qui passait dans le contact passe dans la résistance 74.

En pratique, la valeur du premier seuil de température T1 est comprise entre 50°C et 70°C, et vaut de préférence 60°C.

Le second capteur 72, relié en série au capteur 70 par un câble 71, comprend un contact électrique adapté pour s'ouvrir lorsque la température de la surface externe 50 dépasse une seconde valeur seuil T2 supérieure à la première valeur seuil T1.

En pratique, la valeur du second seuil de température T2 est comprise entre 70°C et 90°C, et vaut de préférence 80°C.

Les capteurs 70 et 72 sont de préférence des capteurs bilames.

L'ensemble des capteurs 70 et 72 du système de surveillance 7 est relié en série dans un circuit électrique 76. Comme cela est visible à la figure 1, un capteur 72 d'un premier condensateur est relié en série à un capteur 70 d'un second condensateur, et ainsi de suite, pour former une boucle normalement fermée.

Le système de surveillance 7 inclut une unité de détection 78 adaptée pour surveiller les variations de la résistance dans le circuit 76. A cet effet, l'unité de détection 78 comprend un détecteur de la tension U aux bornes d'une résistance 80 connectée en série au circuit 76. Le circuit 76 est également connecté en série à une source de tension 82 qui fournit une tension de valeur nominale E.

On note R la valeur de la résistance 80 et r la valeur des résistances 74. La valeur R est choisie proportionnellement à la valeur r selon un rapport k entre la valeur R de la résistance 80 et la valeur r de la résistance 74.

La valeur r est choisie suffisamment grande pour pouvoir négliger les résistances de contact et de connexion de l'ensemble du circuit 76.

Les variations de la résistance du circuit 76 sont détectées en mesurant la tension U aux bornes de la résistance 80, et en comparant la tension E fournie par la source de tension 82 à la tension U. En l'absence d'échauffement de condensateurs, tous les contacts électriques des capteurs 70 et 72 sont fermés. Les résistances des capteurs 70 et 72 sont négligeables lorsque les capteurs 70 et 72 sont en position fermée. Lorsqu'aucun capteur 70 ou 72 n'est ouvert, la valeur de la tension U est donc égale à la valeur de la tension E.

Si la tension U mesurée est égale à la tension E, cela signifie qu'il n'y a eu aucune variation de résistance dans le circuit 76. On peut donc conclure que tous les condensateurs 5 ont une température inférieure au seuil T1. Si la tension U est différente de la tension E, cela signifie que la résistance du circuit 76 a subi une variation qui provient de l'ouverture de l'un des contacts 70 et du passage du courant circulant dans le circuit 76 dans l'une des résistances 74. Cela permet de détecter que l'un des condensateurs 5 de la batterie 3 a atteint une température supérieure à la valeur T1.

La valeur de la tension U permet de déterminer combien de capteurs 70 sont ouverts, et donc le nombre N de condensateurs 5 dont la température a dépassé le premier seuil T1. Le nombre N est donné par la relation suivante :

$$N = k \times \left( \frac{E}{U} - 1 \right) \qquad \text{(Equation 1)}$$

Si le nombre N de condensateurs dont la température a dépassé la valeur T1 est supérieur à 3, un signal d'alarme est émis par l'unité de détection 78, par exemple grâce à un indicateur lumineux 90 produisant des changements de couleurs significatifs.

Pour déterminer quels condensateurs 5 sont en surchauffe, le système de surveillance 7 peut comprendre pour chaque condensateur 5, un moyen de signalisation visuelle de la surchauffe. En variante, cette détermination peut être effectuée par un opérateur, par exemple à l'aide d'une caméra thermique ou d'un détecteur infrarouge.

Si la valeur U devient égale à zéro, cela signifie que le circuit 76 est ouvert, à cause de l'ouverture de l'un des capteurs 72. Cela signifie que le condensateur 5 dont la température est surveillée par le capteur 72 qui s'est ouvert a atteint une température supérieure à la valeur T2. Dans un tel cas, l'unité de détection 78 signale cette situation par l'indicateur lumineux 90 et met hors tension l'appareil électrique 100, ce qui provoque la déconnexion de la batterie de condensateurs 3 afin de protéger l'installation de compensation 1. Le système de surveillance 7 comprend à cet effet un relais 79 adapté pour ouvrir un interrupteur 81 connecté entre le réseau 2 et l'équipement électrique 100.

L'unité de détection 78 peut être équipée de moyens de communication permettant de signaler à distance l'état de fonctionnement de l'installation de compensation 1.

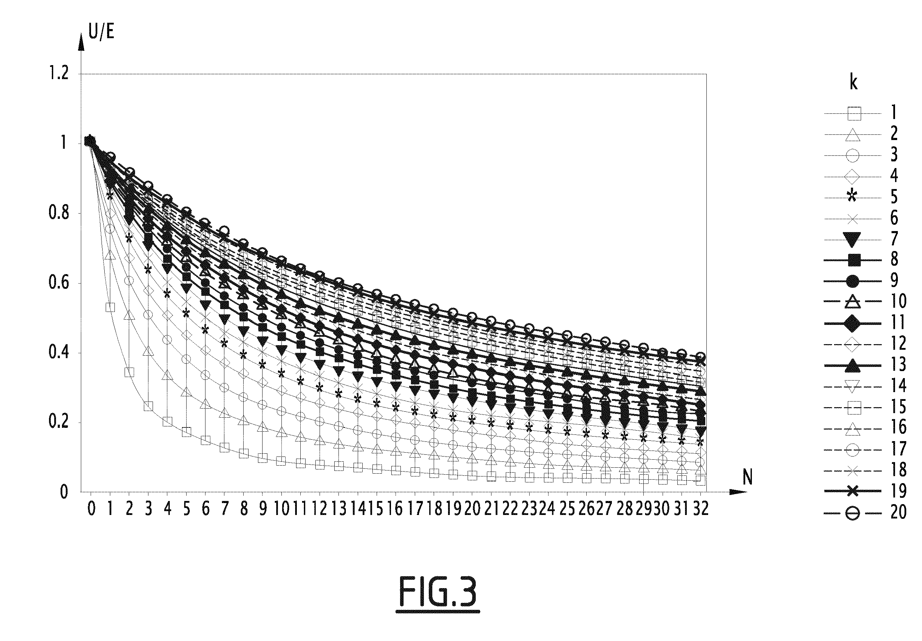

La sensibilité des mesures du système de surveillance 7 est choisie en modifiant le rapport k. La courbe de la figure 3 montre l'évolution du rapport entre U et E en fonction de la valeur du rapport k et du nombre N de condensateurs ayant atteint le premier seuil de température T1. Si k = 1, c'est-à-dire R = r, la valeur U/E chute rapidement quand le nombre N augmente. Il devient alors difficile de distinguer les variations de U par rapport à la situation normale, dans laquelle aucun condensateur n'est en surchauffe, ce qui peut conduire à la non-détection de la surchauffe de certains condensateurs. Pour obtenir une bonne résolution, le rapport k est de préférence choisi entre 5 et 10, de manière que la variation de U par rapport à E soit suffisamment significative pour permettre la détection des variations de résistance dans le circuit 76, et donc les surchauffes des condensateurs.

Le système de surveillance selon l'invention permet de surveiller la température des condensateurs 5 d'une batterie de condensateurs 3 de façon simple et nécessitant peu de temps de câblage, car tout le câblage est réalisé en série. Les capteurs 70 et 72 sont reliés entre eux en série, et la détection de surchauffe de condensateurs est permise par une simple mesure de tension U aux bornes d'une seule résistance 80 connectée en série aux capteurs.

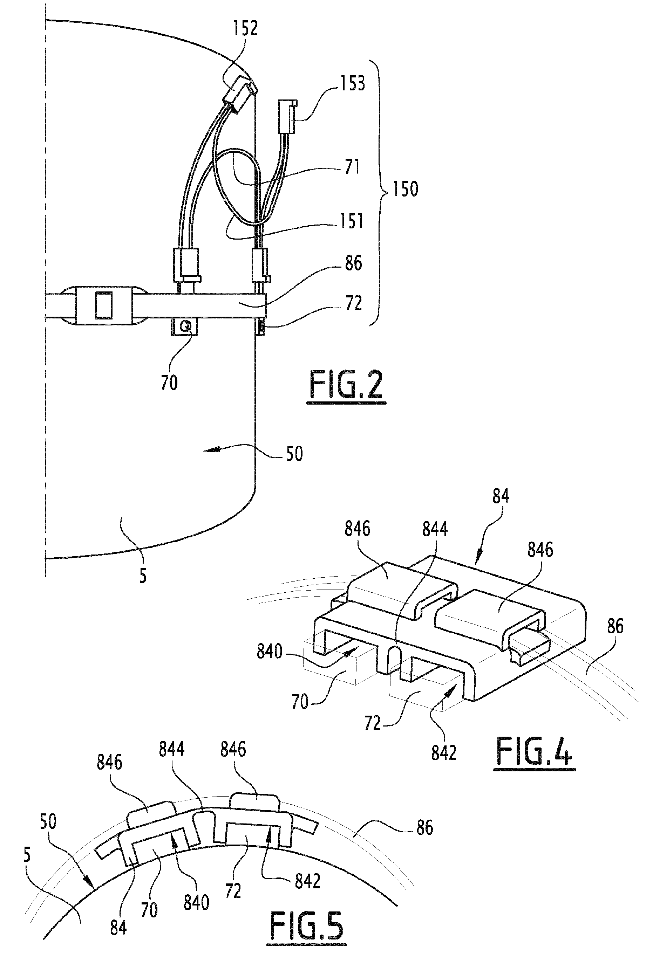

Ainsi, le système de surveillance 7 peut être installé et câblé de façon très simple en fixant sur chaque condensateur 5 une unité de mesure 150 comprenant, préalablement câblés, des capteurs 70 et 72 et une résistance 74. Chaque unité de mesure 150 comprend également des bornes permettant sa connexion en série au sein du circuit 76. Une première borne 150a est reliée au capteur 70, une seconde borne 150b est reliée au capteur 72, et deux bornes 150c et 150d, reliées par un fil 151 indépendamment des capteurs 70 et 72, permettent de fermer le circuit 76. Sur la figure 2, les bornes 150a et 150c sont appariées grâce à un connecteur 152, et les bornes 150b et 150d sont appariées grâce à un connecteur 153. Les unités de mesure 150 peuvent être fabriquées de façon identique et implantées sur chaque condensateur, ce qui facilite sensiblement l'installation du système 7.

Entre chaque paire de deux condensateurs 5 adjacents, des connecteurs 160 comprenant deux câbles parallèles permettent la connexion des unités de mesure 150 en connectant respectivement la borne 150a d'une première unité de mesure à la borne 150b d'une seconde unité de mesure, et la borne 150c de la première unité de mesure à la borne 150d d'une seconde unité de mesure.

Un second mode de réalisation de l'invention est représenté aux figures 4 et 5. Dans ce mode de réalisation, les éléments communs au premier mode de réalisation portent les mêmes références et fonctionnent de la même manière. Seules les différences par rapport au premier mode de réalisation sont détaillées ci-après.

Dans le mode de réalisation des figures 4 et 5, le système de surveillance 7 comprend, pour chaque condensateur 5, un système de maintien en position des capteurs de températures 70 et 72 associés à ce condensateur 5. Ce système comprend un support 84, présentant deux logements parallèles 840 et 842 dans lesquels les capteurs 70 et 72 sont montés. Les logements 840 et 842 sont articulés l'un par rapport à l'autre au moyen d'une partie longitudinale flexible 844 permettant l'adaptation de la forme du support 84 à la surface externe cylindrique 50 des condensateurs 5. Les logements 840 et 842 sont ouverts du côté de la surface externe 50 de manière que les capteurs 70 et 72 soient directement en contact avec la surface externe 50.

A l'opposé de la surface externe 50, le support 84 comporte des passants 846 de guidage de la sangle 86 de serrage apte à positionner et à plaquer le support 84 et les capteurs 70 et 72 contre la surface externe 50 de manière à maximiser la conduction thermique.

Selon un mode de réalisation non représenté, une partie du système de surveillance 7, notamment l'unité de détection 78, le relais 79, la résistance 80, l'interrupteur 81, la source de tension 82 et l'indicateur lumineux 90, peut être intégrée à l'équipement de contrôle/commande 100.

Les caractéristiques techniques des modes de réalisation et variantes décrits ci-dessus peuvent être combinées pour créer de nouveaux modes de réalisation de l'invention.

**Revendications**

1. Système de surveillance (7) d'une batterie (3) de condensateurs (5) comprenant des capteurs de température (70, 72) montés sur chacun des condensateurs (5), **caractérisé en ce que** sur la surface externe (50) de chaque condensateur (5) sont montés deux capteurs (70, 72) de température, un premier capteur (70) comprenant un contact électrique adapté pour s'ouvrir lorsque la température (T) de la surface externe (50) du condensateur (5) dépasse une première valeur seuil (T1), le contact électrique du premier capteur (70) étant connecté en parallèle à une résistance (74), le second capteur (72) incluant un second contact électrique adapté pour s'ouvrir lorsque la température (T) de la surface externe (50) du condensateur (5) dépasse une seconde valeur seuil (T2) supérieure à la première valeur seuil (T1), **en ce que** tous les capteurs (70, 72) du système (7) sont reliés en série au sein d'un circuit électrique (76), et **en ce que** le système de surveillance (7) comprend une unité de détection (78) adaptée pour surveiller les variations de la résistance du circuit (76) reliant les capteurs.

2. Système de surveillance selon la revendication 1, **caractérisé en ce que** l'unité de détection (78) comprend des moyens de mesure de la tension (U) aux bornes d'une résistance (80) appartenant au circuit (76) dans lequel l'ensemble des capteurs (70, 72) de température sont reliés en série.

3. Système de surveillances selon la revendication 2, **caractérisé en ce qu'**il comprend une source (82) de tension (E) connectée en série au circuit électrique (76) au sein duquel l'ensemble des capteurs (70, 72) de température sont reliés en série.

4. Système de surveillance selon l'une des revendications précédentes, **caractérisé en ce que** la valeur du premier seuil de température (T1) est comprise entre 50°C et 70°C, et vaut de préférence 60°C.

5. Système de surveillance selon l'une des revendications précédentes, **caractérisé en ce que** la valeur du second seuil de température (T2) est comprise entre 70°C et 90°C, et vaut de préférence 80°C.

6. Système de surveillance selon l'une des revendications précédentes, **caractérisé en ce qu'**il comprend des unités de mesure (150) comprenant chacune, préalablement câblés, des premier et second capteurs de température (70, 72) et une résistance (74) reliée au premier capteur (70), et des bornes (150a-150d) de raccordement des unités de mesure (150) entre elles.

7. Système de surveillance selon l'une des revendications précédentes, **caractérisé en ce qu'**il comprend, pour chaque condensateur (5), un système de maintien des capteurs (70, 72) de température associés à ce condensateur (5), incluant un support (84) dans lequel les capteurs (70, 72) sont montés et dans lequel est insérée une sangle de serrage (86) apte à plaquer le support (84) et les capteurs de température (70, 72) contre la surface externe (50) du condensateur (5).

8. Système de surveillance selon la revendication 7, **caractérisé en ce que** le support (84) comprend deux logements (840, 842) dans lesquels les capteurs (70, 72) sont insérés, et **en ce que** les logements (840, 842) sont articulés au moyen d'une partie flexible (844) de manière à s'adapter à la surface externe (50) des condensateurs (5).

9. Système de surveillance selon l'une des revendications précédentes, **caractérisé en ce que** l'unité de détection (78) est adaptée pour déterminer automatiquement et par le calcul le nombre (N) de condensateurs (5) dont la température (T) a dépassé le premier seuil de température (T1).

10. Installation électrique de compensation (1) comprenant un dispositif électrique (100) de contrôle/commande et une batterie (3) de condensateurs (5), **caractérisé en ce qu'**il comprend un système de surveillance (7) selon l'une des revendications précédentes, et **en ce que** le système de surveillance (7) est adapté pour désactiver le dispositif électrique (100) de contrôle/commande lorsqu'un nombre prédéfini (N) de condensateurs (5) de la batterie (3) atteint le premier seuil (T1) de température ou si un condensateur (5) atteint le second seuil (T2) de température.

**Patentansprüche**

1. Überwachungssystem (7) für eine Kondensatorbatterie (3, 5), Temperatursensoren (70, 72) umfassend, die an jedem der Kondensatoren (5) montiert sind, **dadurch gekennzeichnet, dass** an der Außenfläche (50) jedes Kondensators (5) zwei Temperatursensoren (70, 72) befestigt sind, wobei ein erster Sensor (70) einen elektrischen Kontakt aufweist, der angepasst ist, sich zu öffnen, wenn die Temperatur (T) der Außenfläche (50) des Kondensators (5) einen ersten Schwellenwert (T1) überschreitet, der elektrische Kontakt des ersten Sensors (70) parallel zu einem Widerstand (74) geschaltet ist, der zweite Sensor (72) einen zweiten elektrischen Kontakt einschließt, der angepasst ist, sich zu öffnen, wenn die Temperatur (T) der Außenfläche (50) des Kondensators (5) einen zweiten Schwellenwert (T2), größer als der erste Schwellenwert (T1) überschreitet, dass alle Sensoren (70, 72) des Systems (7) in einem elektrischen Schaltkreis (76) in Reihe geschaltet sind, und dass das Überwachungssystem (7) eine Detektionseinheit (78) umfasst, die angepasst ist, die Änderungen des Widerstands des die Sensoren verbindenden Schaltkreises (76) zu überwachen.

2. Überwachungssystem nach Anspruch 1, **dadurch gekennzeichnet, dass** die Detektionseinheit (78) Mittel zur Messung der Spannung (U) an den Anschlüssen eines Widerstands (80) umfasst, der zu dem Schaltkreis (76), in dem die Anordnung der Temperatursensoren (70, 72) in Reihe geschaltet sind, gehört.

3. Überwachungssystem nach Anspruch 2, **dadurch gekennzeichnet, dass** es eine Spannungsquelle (82, E) umfasst, die mit dem elektrischen Schaltkreis (76), in dem die Anordnung der Temperatursensoren (70, 72) in Reihe geschaltet sind, in Reihe verbunden ist.

4. Überwachungssystem nach einem der vorhergehenden Ansprüche, **dadurch gekennzeichnet, dass** der Wert der ersten Temperaturschwelle (T1) zwischen 50°C und 70°C liegt und vorzugsweise 60°C beträgt.

5. Überwachungssystem nach einem der vorhergehenden Ansprüche, **dadurch gekennzeichnet, dass** der Wert der zweiten Temperaturschwelle (T2) zwischen 70°C und 90°C liegt und vorzugsweise 80°C beträgt.

6. Überwachungssystem nach einem der vorhergehenden Ansprüche, **dadurch gekennzeichnet, dass** es Messeinheiten (150) umfasst, die jeweils, vorher verkabelt, einen ersten und zweiten Temperatursensor (70, 72) und einen Widerstand (74), der an dem ersten Sensor (70) angeschlossen ist, und Anschlusskontakte (150a -150d) für die Messeinheiten (150) untereinander umfassen.

7. Überwachungssystem nach einem der vorhergehenden Ansprüche, **dadurch gekennzeichnet, dass** es für jeden Kondensator (5) ein System zum Halten der Temperatursensoren (70, 72), die diesem Kondensator (5) zugeordnet sind, einschließlich eines Trägers (84) umfasst, in dem die Sensoren (70, 72) montiert sind, und in den ein Spanngurt (86) eingefügt ist, der geeignet ist, den Träger (84) und die Temperatursensoren (70, 72) gegen die Außenfläche (50) des Kondensators (5) zu pressen.

8. Überwachungssystem nach Anspruch 7, **dadurch gekennzeichnet, dass** der Träger (84) zwei Aufnahmeräume (840, 842) umfasst, in die die Sensoren (70, 72) eingesetzt sind, und dass die Aufnahmeräume (840, 842) mittels eines flexiblen Teils (844) gelenkig angeordnet sind, derart, dass sie sich an die Außenfläche (50) der Kondensatoren (5) anpassen.

9. Überwachungssystem nach einem der vorhergehenden Ansprüche, **dadurch gekennzeichnet, dass** die Detektionseinheit (78) ausgebildet ist, automatisch und durch Berechnung die Anzahl (N) der Kondensatoren (5) zu bestimmen, deren Temperatur (T) die erste Temperaturschwelle (T1) überschreitet.

10. Elektrische Kompensationsanlage (1), eine elektrische Vorrichtung (100) zur Überwachung/Steuerung und eine Kondensatorbatterie (3, 5) umfassend, **dadurch gekennzeichnet, dass** sie ein Überwachungssystem (7) nach einem der vorhergehenden Ansprüche umfasst und dass das Überwachungssystem (7) geeignet ist, die elektrische Vorrichtung (100) zur Überwachung/Steuerung zu deaktivieren, wenn eine vorbestimmte Anzahl (N) von Kondensatoren (5) der Batterie (3) die erste Temperaturschwelle (T1) erreicht oder wenn ein Kondensator (5) die zweite Temperaturschwelle (T2) erreicht.

**Claims**

1. Monitoring system (7) for a bank (3) of capacitors (5) comprising temperature sensors (70, 72) mounted on each of the capacitors (5), **characterised in that** two temperature sensors (70, 72) are mounted on the outer surface (50) of each capacitor (5), wherein a first sensor (70) comprises an electrical contact fitted to open when the temperature (T) of the outer surface (50) of the capacitor (5) exceeds a first threshold value (T1), the electrical contact of the first sensor (70) being connected in parallel to a resistor (74), and the second sensor (72) includes a second electrical contact fitted to open when the temperature (T) of the outer surface (50) of the capacitor (5) exceeds a second threshold value (T2) higher than the first threshold value (T1), **in that** the sensors (70, 72) of the system (7) are connected in series within an electric circuit (76), and **in that** the monitoring system (7) comprises a detection unit (78) fitted to monitor variations in the resistance of the circuit (76) connecting the sensors.

2. Monitoring system according to claim 1, **characterised in that** the detection unit (78) comprises devices for measuring the voltage (U) at the terminals of a resistor (80) belonging to the circuit (76), in which all the temperature sensors (70, 72) are connected in series.

3. Monitoring system according to claim 2, **characterised in that** it comprises a voltage (E) source (82) connected in series to the electric circuit (76), within which all the temperature sensors (70, 72) are connected in series.

4. Monitoring system according to one of the preceding claims, **characterised in that** the value of the first temperature threshold (T1) ranges between 50°C and 70°C and preferably amounts to 60°C.

5. Monitoring system according to one of the preceding claims, **characterised in that** the value of the second temperature threshold (T2) ranges between 70°C and 90°C and preferably amounts to 80°C.

6. Monitoring system according to one of the preceding claims, **characterised in that** it comprises measurement units (150), each comprising pre-wired first and second temperature sensors (70, 72) and a resistor (74) connected to the first sensor (70), and terminals (150a-150d) for connecting the measurement units (150) to one another.

7. Monitoring system according to one of the preceding claims, **characterised in that** for each capacitor (5) it comprises a holding system for the temperature sensors (70, 72) linked to this capacitor (5) including a support (84), in which the sensors (70, 72) are mounted and into which is inserted a tightening strap (86) fitted to press the support (84) and the temperature sensors (70, 72) against the outer surface (50) of the capacitor (5).

8. Monitoring system according to claim 7, **characterised in that** the support (84) comprises two seats (840, 842), into which the sensors (70, 72) are inserted, and **in that** the seats (840, 842) are articulated by means of a flexible part (844) in order to fit to the outer surface (50) of the capacitors (5).

9. Monitoring system according to one of the preceding claims, **characterised in that** the detection unit (78) is fitted to determine automatically and by calculation the number (N) of capacitors (5), in which the temperature (T) has exceeded the first threshold value (T1).

10. Electrical compensation installation (1) comprising an electrical control/operating device (100) and a bank (3) of capacitors (5), **characterised in that** it comprises a monitoring system (7) according to one of the preceding claims, and **in that** the monitoring system (7) is fitted to deactivate the electrical control/operating device (100) when a predefined number (N) of capacitors (5) of the bank (3) reaches the first temperature threshold (T1) or if a capacitor (5) reaches the second temperature threshold (T2).

**FIG.1**

FIG.2

FIG.4

FIG.5

FIG.3

**EP 2 963 755 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20130050878 A